(19) Europäisches Patentamt / European Patent Office / Office européen des brevets

(11) **EP 2 869 084 B1**

(12) **FASCICULE DE BREVET EUROPEEN**

(45) Date de publication et mention
de la délivrance du brevet:
**01.08.2018 Bulletin 2018/31**

(51) Int Cl.:
***G01S 19/21*** *(2010.01)*

(21) Numéro de dépôt: **14190294.0**

(22) Date de dépôt: **24.10.2014**

(54) **Procédé de détection d'interférences dans un signal de radio-navigation par satellite**

Verfahren zum Erfassen von Interferenzen in einem Satelliten-Funknavigationssignal

Method for detecting interferences in a satellite radio navigation signal

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2013 FR 1302523**

(43) Date de publication de la demande:
**06.05.2015 Bulletin 2015/19**

(73) Titulaire: **THALES**
**92400 Courbevoie (FR)**

(72) Inventeurs:
• **Revol, Marc**
**26120 UPIE (FR)**
• **Pietin, David**
**33187 LE HAILLAN Cedex (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**WO-A1-2004/031797    WO-A1-2009/158049
JP-A- 2013 181 803    US-A1- 2012 001 798**

**Description**

La présente invention concerne le domaine des systèmes de radio-navigation par satellite et plus précisément les récepteurs de signaux de radio-navigation par satellite.

L'invention porte sur un procédé de détection d'interférences dans un signal de radio-navigation par satellite reçu par un tel récepteur.

Lorsque le signal de radio-navigation est superposé à un signal interférant bande étroite, cela a pour effet d'engendrer des erreurs de mesure qui impactent les calculs de temps et de position effectués par le récepteur et in fine entrainent une erreur de positionnement.

Il est donc important de pouvoir détecter la présence d'interférence dans le signal de radio-navigation reçu afin de pouvoir apporter des traitements correctifs ou d'exclure les mesures effectuées en présence d'interférence.

Les solutions connues au problème précité sont basées sur la détection d'une mesure aberrante par rapport à une moyenne ou un écart attendu.

Ces solutions présentent l'inconvénient de nécessiter un temps de détection trop important entre l'instant ou l'interférence apparait et l'instant où elle est effectivement détectée.

On connait par ailleurs les solutions décrites dans les documents US 2012/0001798 et WO 2004/031797.

L'invention propose une méthode de détection d'interférences basée sur la mesure de la dispersion de phase entre deux mesures de corrélations réalisées pour deux décalages temporels consécutifs.

L'invention peut être exécutée par un récepteur de positionnement par satellite lors de la phase de poursuite du signal de radio-navigation.

L'invention a pour objet un procédé de détection d'interférences dans un signal de radio-navigation par satellite selon la revendication 1. L'invention a également pour objet un dispositif de réception de signaux de radio-navigation par satellite selon la revendication 4.

Des aspects particuliers de l'invention sont définis par les revendications dépendantes. D'autres caractéristiques et avantages de la présente invention apparaîtront mieux à la lecture de la description qui suit en relation aux dessins annexés qui représentent :

- La figure 1, un synoptique d'un dispositif de réception de signaux de radio-navigation adapté pour mettre en oeuvre le procédé selon l'invention,
- La figure 2, un organigramme décrivant les étapes de mise en oeuvre du procédé de détection d'interférences selon l'invention.

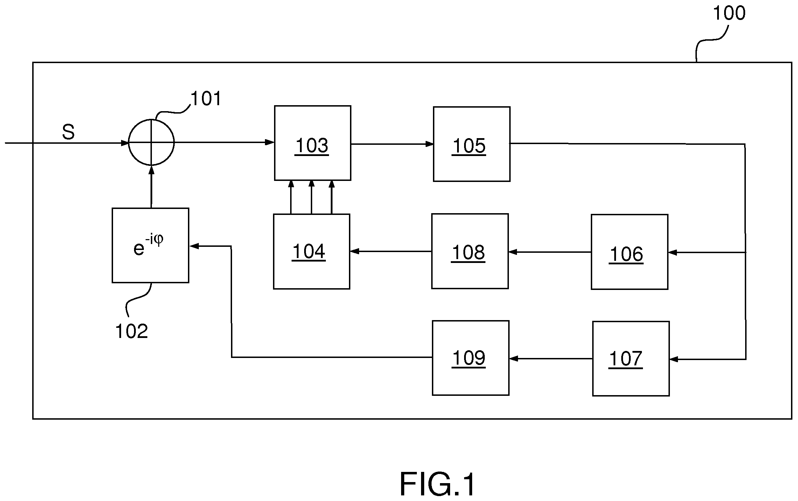

La figure 1 représente un synoptique d'un dispositif de réception de signaux de radio-navigation adapté pour mettre en oeuvre le procédé selon l'invention.

Un tel dispositif 100 est basé sur un récepteur de signaux de radio-navigation usuel qui comporte notamment les fonctionnalités suivantes. Le signal reçu S est démodulé en phase par l'intermédiaire d'un démodulateur 101 et d'une porteuse locale 102. Le signal S démodulé est ensuite transmis à un corrélateur 103 pour effectuer une corrélation du signal S avec un code d'étalement généré localement 104. Avantageusement, plusieurs corrélations sont réalisées en appliquant des retards différents au signal reçu à chaque fois. Typiquement, trois corrélations peuvent être réalisées, l'une à un instant temporel donné, l'une en avance de cet instant et la dernière en retard de ce même instant, les décalages avance et retard étant de durée inférieure à la durée d'un chip du code d'étalement.

Selon l'invention, plusieurs corrélations additionnelles peuvent être réalisées, avec des retards configurables équirépartis.

Le résultat de ces corrélations additionnelles est fourni à un module 105 de détection d'interférences selon l'invention qui exécute un procédé décrit plus loin dans le texte.

Le dispositif 100 comporte également un discriminateur de code 106 et un opérateur de contrôle numérique NCO 108 pour piloter la génération du code local, en particulier l'instant temporel auquel est réalisé la corrélation principale.

Le dispositif 100 peut comporter également un discriminateur de phase 107 et un opérateur de contrôle numérique NCO 109 pour piloter la génération de la porteuse locale 102, autrement dit la valeur du déphasage à imprimer au signal reçu S.

Le dispositif 100 selon l'invention peut comporter toute autre fonctionnalité habituellement implémentée dans un récepteur de signaux de radio-navigation par satellite. Les éléments décrits sur la figure 1 peuvent également être remplacés par toute autre fonction équivalente.

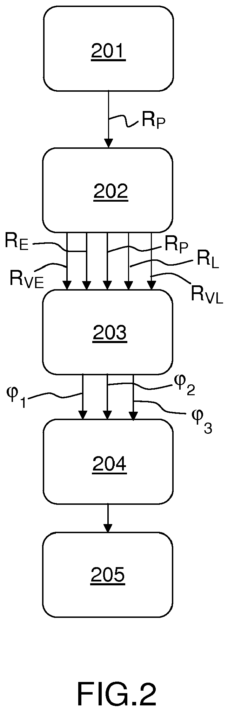

Le procédé selon l'invention comprend, comme illustré sur l'organigramme de la figure 2 principalement cinq étapes.

Dans une première étape 201, on détermine, à partir des résultats de corrélation fournis par le module 103, le maximum $R_P$ de la fonction de corrélation entre le code d'étalement généré localement et le signal reçu décalé temporellement d'un retard configurable. On retient la position temporelle associée à ce maximum de corrélation qui correspond, en l'absence d'interférence, à l'instant où le signal reçu et le code d'étalement sont correctement synchronisés, autrement dit sont en phase. Cette première étape 201 du procédé selon l'invention est implémentée par un récepteur de signaux de radio-navigation selon l'art antérieur dans le but de déterminer une information de positionnement.

Dans une deuxième étape 202, on détermine plusieurs mesures de corrélation supplémentaires $R_{VL}, R_L, R_E, R_{VE}$. Chaque mesure est obtenue en décalant le signal reçu d'un retard positif ou négatif paramétrable. L'ensemble des positions temporelles auxquelles sont effectuées les différentes mesures de corrélation, y compris la mesure du maximum de corrélation $R_P$, sont équiréparties. Autrement dit, la durée entre deux positions temporelles de corrélation consécutives est sensiblement constante.

Selon une variante de réalisation de l'invention, chaque mesure de corrélation est compensée par la valeur théorique attendue de la corrélation en l'absence d'interférence. Autrement dit on soustrait cette valeur à la mesure. Cette opération permet de supprimer de la mesure de corrélation la contribution du signal utile pour ne conserver que la contribution du bruit et des interférences. La valeur théorique attendue de la corrélation peut être calculée par une estimation de la puissance du signal utile lui-même obtenu à partir d'une information sur le rapport signal à bruit de fonctionnement du récepteur et d'une mesure de la puissance du bruit fournie par des moyens externes à l'invention.

Dans une troisième étape 203, on détermine la différence de phase entre deux mesures de corrélation à deux positions temporelles consécutives. En l'absence d'interférence, cette différence de phase est aléatoire. Par contre, en présence d'un signal interférent bande étroite, cette différence de phase est sensiblement constante car la phase du signal interférent suit une évolution linéaire avec le retard appliqué à la corrélation. De plus la corrélation du signal reçu avec le code d'étalement local ne modifie pas cette évolution.

Dans une quatrième étape 204, on détermine une information représentative de l'écart type de la différence de phase définie à l'étape 203. En présence d'interférence, cet écart type est faible car la phase du signal interférent évolue linéairement avec le retard. En revanche, en l'absence d'interférence, cet écart type est élevé car la phase suit une répartition aléatoire.

A partir de cette constatation, il est possible de construire un critère de détection d'interférence basé sur la comparaison de l'écart type, ou d'une fonction de l'écart type, à un seuil de détection.

Le critère de détection utilisé peut être égal à la valeur absolue du rapport entre la moyenne des différences de phase calculées à l'étape 203 et leur écart type. D'autres critères équivalents peuvent être utilisés, par exemple l'inverse de l'écart type ou un multiple de cet inverse.

La moyenne M et l'écart type $\Omega$ peuvent être calculés à l'aide des relations suivantes, où le signe * désigne l'opérateur complexe conjugué :

$$M = \frac{\sum_{k=0}^{K}(\arg(R_{VE}(kT).R_{VVE}(kT)^*) + ... + (\arg(R_P(kT).R_E(kT)^*) + ... + (\arg(R_{VVL}(kT).R_{VL}(kT)^*)}{K}$$

$$\Omega = \frac{\sqrt{\sum_{k=0}^{K}\left|(\arg(R_{VE}(kT).R_{VVE}(kT)^*)... + (\arg(R_P(kT).R_E(kT)^*)... + (\arg(R_{VVL}(kT).R_{VL}(kT)^*) - M\right|^2}}{K}$$

L'indicateur d'interférences utilisé peut être égal à $\gamma = \left|\dfrac{M}{\Omega}\right|$.

Dans une cinquième étape 205, l'indicateur $\gamma$ est comparé à un seuil de détection d'interférences $S_{DET}$ configuré en fonction du rapport des puissances entre le signal utile et le signal interférant. Si l'indicateur $\gamma$ est supérieur au seuil de détection $S_{DET}$ alors cela signifie que l'écart type $\Omega$ est faible et on conclut à la présence d'interférence.

Dans les différentes variantes de réalisation du dispositif 100 selon l'invention, les modules de calcul peuvent être agencés selon différentes architectures, en particulier chaque étape du procédé selon l'invention peut être implémentée par un module distinct ou au contraire les deux étapes peuvent être regroupées au sein d'un module de calcul unique.

Chacun des modules de calcul que comporte le dispositif selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

**Revendications**

1. Procédé de détection d'interférences dans un signal de radio-navigation par satellite **caractérisé en ce qu'**il comporte les étapes suivantes :

   • Déterminer (201) une première position temporelle pour laquelle la corrélation entre un code d'étalement local et ledit signal, décalé de ladite position, est maximum,
   • Déterminer (202) une pluralité de mesures de corrélation entre ledit code d'étalement local et ledit signal décalé d'une pluralité de positions temporelles secondaires, l'ensemble des positions temporelles comprenant ladite pluralité de positions temporelles secondaires et ladite première position temporelle étant régulièrement espacées,
   • Déterminer (203), pour une pluralité de couples différents de mesures de corrélation formés par deux mesures à deux positions temporelles consécutives, prises parmi ledit ensemble de positions temporelles, la différence de phase entre les deux mesures de corrélation dudit couple,
   • Calculer (204) une information représentative de l'écart type de ladite différence de phase en se basant sur les différences de phase déterminées pour ladite pluralité de couples,
   • Comparer (205) ladite information à un seuil de détection configuré au moins en fonction du rapport des puissances du signal et de l'interférence.

2. Procédé de détection d'interférences dans un signal de radio-navigation par satellite selon la revendication 1 dans lequel ladite information est égale à la valeur absolue du rapport entre la moyenne de ladite différence de phase et l'écart type de ladite différence de phase.

3. Procédé de détection d'interférences dans un signal de radio-navigation par satellite selon l'une des revendications 1 ou 2 dans lequel lesdites mesures de corrélation sont compensées de la valeur attendue de la corrélation en l'absence d'interférence.

4. Dispositif (100) de réception de signaux de radio-navigation par satellite comprenant :

   • Des premiers moyens de calcul (103) configurés pour déterminer une première position temporelle pour laquelle la corrélation entre un code d'étalement local et ledit signal, décalé de ladite position, est maximum et pour déterminer une pluralité de mesures de corrélation entre ledit code d'étalement local et ledit signal décalé d'une pluralité de positions temporelles secondaires, l'ensemble des positions temporelles comprenant ladite pluralité de positions temporelles secondaires et ladite première position temporelle étant régulièrement espacées,
   • Des seconds moyens de calcul (105) configurés pour déterminer, pour une pluralité de couples différents de mesures de corrélation formés par deux mesures à deux positions temporelles consécutives, prises parmi ledit ensemble de positions temporelles, la différence de phase entre les deux mesures de corrélation dudit couple, calculer une information représentative de l'écart type de ladite différence de phase en se basant sur les différences de phase déterminées pour ladite pluralité de couples, et comparer ladite information à un seuil de détection configuré au moins en fonction du rapport des puissances du signal et de l'interférence.

5. Dispositif (100) de réception de signaux de radio-navigation par satellite selon la revendication 4 dans lequel ladite information est égale à la valeur absolue du rapport entre la moyenne de ladite différence de phase et l'écart type de ladite différence de phase.

6. Dispositif (100) de réception de signaux de radio-navigation par satellite selon l'une des revendications 4 ou 5 dans lequel les premiers moyens de calcul (103) sont en outre configurés pour compenser lesdites mesures de corrélation de la valeur attendue de la corrélation en l'absence d'interférence.

**Patentansprüche**

1. Verfahren zum Erfassen von Interferenzen in einem Satellitenfunknavigationssignal, **dadurch gekennzeichnet, dass** es die folgenden Schritte beinhaltet:

   • Bestimmen (201) einer ersten zeitlichen Position, für die die Korrelation zwischen einem lokalen Spreizcode und dem von der Position versetzten Signal maximal ist,

• Bestimmen (202) mehrerer Korrelationsmesswerte zwischen dem lokalen Spreizcode und dem von mehreren sekundären zeitlichen Positionen versetzten Signal, wobei die Gesamtheit der zeitlichen Positionen umfassend die Mehrzahl von sekundären zeitlichen Positionen und die erste zeitliche Position gleichmäßig beabstandet sind,

• Bestimmen (203), für mehrere unterschiedliche Korrelationsmesswertpaare, die durch zwei Messungen an zwei konsekutiven zeitlichen Positionen gebildet wurden, genommen aus der Gesamtheit von zeitlichen Positionen, der Phasendifferenz zwischen den zwei Korrelationsmesswerten des Paares,

• Berechnen (204) einer Information, die die Standardabweichung der Phasendifferenz repräsentiert, durch Basieren auf den für die mehreren Paaren bestimmten Phasendifferenzen,

• Vergleichen (205) der Information mit einer Erfassungsschwelle, konfiguriert wenigstens in Abhängigkeit vom Verhältnis der Leistungen des Signals und der Interferenz.

2. Interferenzerfassungsverfahren in einem Satellitenfunknavigationssignal nach Anspruch 1, bei dem die Information gleich dem Absolutwert des Verhältnisses zwischen dem Mittel der Phasendifferenz und der Standardabweichung der Phasendifferenz ist.

3. Interferenzerfassungsverfahren in einem Satellitenfunknavigationssignal nach Anspruch 1 oder 2, in dem die Korrelationsmesswerte mit dem erwarteten Wert der Korrelation in Abwesenheit von Interferenzen kompensiert werden.

4. Vorrichtung (100) zum Empfangen von Satellitenfunknavigationssignalen, die Folgendes umfasst:

• erste Rechenmittel (103), konfiguriert zum Bestimmen einer ersten zeitlichen Position, für die die Korrelation zwischen einem lokalen Spreizcode und dem von der Position versetzten Signal maximal ist, und zum Bestimmen mehrerer Korrelationsmesswerte zwischen dem lokalen Spreizcode und dem von mehreren sekundären zeitlichen Positionen versetzten Signal, wobei die Gesamtheit der zeitlichen Positionen umfassend die mehreren sekundären zeitlichen Positionen und die erste zeitliche Position gleichmäßig beabstandet sind,

• zweite Rechenmittel (105) konfiguriert zum Bestimmen für mehrere unterschiedliche, durch zwei Messwerte an zwei konsekutiven zeitlichen Positionen gebildete Korrelationsmesswertpaare, genommen unter der Gesamtheit der zeitlichen Positionen, der Phasendifferenz zwischen den zwei Korrelationsmesswerten des Paares, Berechnen einer Information, die die Standardabweichung der Phasendifferenz repräsentiert, durch Basieren auf den für die mehreren Paare bestimmten Phasendifferenzen, und Vergleichen der Information mit einer Erfassungsschwelle, konfiguriert wenigstens in Abhängigkeit von dem Verhältnis der Leistungen des Signals und der Interferenz.

5. Vorrichtung (100) zum Empfangen von Satellitenfunknavigationssignalen nach Anspruch 4, in der die Information gleich dem Absolutwert des Verhältnisses zwischen dem Mittel der Phasendifferenz und der Standardabweichung der Phasendifferenz ist.

6. Vorrichtung (100) zum Empfangen von Satellitenfunknavigationssignalen nach Anspruch 4 oder 5, in der die ersten Rechenmittel (103) ferner zum Kompensieren der Korrelationsmesswerte mit dem erwarteten Wert der Korrelation in Abwesenheit von Störungen konfiguriert sind.

**Claims**

1. A method for detecting interference in a satellite radio-navigation signal, **characterised in that** it comprises the following steps:

• determining (201) a first temporal position for which the correlation between a local spreading code and said signal, offset by said position, is maximum,

• determining (202) a plurality of correlation measurements between said local spreading code and said signal offset by a plurality of secondary temporal positions, the set of temporal positions comprising said plurality of secondary temporal positions and said first temporal position being regularly spaced,

• determining (203), for a plurality of different correlation measurement pairs formed by two measurements at two consecutive temporal positions, taken from said set of temporal positions, the phase difference between the two correlation measurements of said pair,

• calculating (204) an item of information representative of the standard deviation of said phase difference based on the phase differences determined for said plurality of pairs,

• comparing (205) said item of information with a detection threshold configured at least as a function of the ratio of the powers of the signal and of the interference.

2. The method for detecting interference in a satellite radio-navigation signal according to Claim 1, in which said item of information is equal to the absolute value of the ratio between the mean of said phase difference and the standard deviation of said phase difference.

3. The method for detecting interference in a satellite radio-navigation signal according to either of Claims 1 or 2, in which said correlation measurements are compensated for the expected value of the correlation in the absence of interference.

4. A device (100) for receiving satellite radio-navigation signals comprising:

   • first calculation means (103), configured to determine a first temporal position for which the correlation between a local spreading code and said signal, offset by said position, is maximum and to determine a plurality of correlation measurements between said local spreading code and said signal offset by a plurality of secondary temporal positions, the set of temporal positions comprising said plurality of secondary temporal positions and said first temporal position being regularly spaced,
   • second calculation means (105) configured to determine, for a plurality of different correlation measurement pairs formed by two measurements at two consecutive temporal positions, taken from said set of temporal positions, the phase difference between the two correlation measurements of said pair, to calculate an item of information representative of the standard deviation of said phase difference based on the phase differences determined for said plurality of pairs, and to compare said item of information with a detection threshold configured at least as a function of the ratio of the powers of the signal and of the interference.

5. The device (100) for receiving satellite radio-navigation signals according to Claim 4, in which said item of information is equal to the absolute value of the ratio between the mean of said phase difference and the standard deviation of said phase difference.

6. The device (100) for receiving satellite radio-navigation signals according to either of Claims 4 or 5 in which the first calculation means (103) are furthermore configured to compensate said correlation measurements for the expected value of the correlation in the absence of interference.

FIG.1

FIG.2

**EP 2 869 084 B1**

## RÉFÉRENCES CITÉES DANS LA DESCRIPTION

### Documents brevets cités dans la description

- US 20120001798 A
- WO 2004031797 A